# EUROPEAN PATENT APPLICATION

(11) **EP 0 926 798 A1**
(43) Date of publication of application: **30.06.1999**
(21) Application number: 98309895.5
(22) Date of filing: 03.12.1998
(51) Int. Cl.: H02J 7/00

(54) **Battery type determination for a radio telephone or battery charger**

(30) Priority: 24.12.1997 US 998179
(71) Applicant: NOKIA MOBILE PHONES LTD., 02150 Espoo (FI)
(72) Inventor: Humphreys, Morris, Saginaw, TX 76198 (US); Leman, Ari, Euless, TX 76039 (US)
(74) Representative: Higgin, Paul

(57) **Abstract**

A battery or battery pack for a portable radio telephone is provided with a machine readable identification on its exterior. An electrical device, such as a portable radio telephone main unit and/or battery charger, has a battery identifier for reading or sensing the identification. Based upon the identification read by the identifier, the electrical device can prevent or establish an operational electrical connection with the battery cells in the battery.

## Description

The present invention relates to batteries and, more specifically, to a system and method for battery identification.

US Patent 5,668,462 discloses a battery charger for a portable radio telephone with a battery-charger connector which can be made differently depending on the type of battery. Thus, the battery charger has its connector keyed to fit a battery of the same type of the charger. As explained, this is important because, although different types of batteries, e.g., nickel-cadmium, lead-acid, alkaline, lithium, etc., can often be interchangeably used to power a cellular phone, these batteries have different characteristics and require different charging rates and conditions. For example, a charging current that is proper for one type of battery may be too great for another type of battery, and in extreme situations, may cause the other type of battery to explode. US Patent 5,668,462 overcomes the problem by using a battery-charger connector that is keyed to a battery charger of the same type as the battery in the phone. Thus, it is assured that the battery will be properly charged, which will prolong the useful life of the battery. A problem with this type of system, however, is that multiple different components must be manufactured for the different connectors and sockets. In addition, this type of solution does not help with electrical connections that are not plug/socket types of connections.

In accordance with one embodiment of the present invention a portable electronic apparatus battery is provided comprising a frame, at least one rechargeable battery cell, and means for identifying a predetermined characteristic of the battery. The battery cell is located inside the frame. The means for identifying a predetermined characteristic of the battery is for identifying the predetermined characteristic by an apparatus which the battery is intended to be operably used with. The identifying means includes a machine readable identification code.

In accordance with another embodiment of the present invention a portable electronic apparatus battery pack is provided comprising a housing, at least two rechargeable battery cells, and means for identifying the battery cells. The battery cells are located inside the housing. The means for identifying the battery cells is for identifying the battery cells inside the housing by an electronic apparatus which the battery pack is intended to be operably used with. The identifying means includes a machine readable identification code.

In accordance with another embodiment of the present invention a combined apparatus having a battery and an electrical device is provided. The battery has a frame, at least one rechargeable battery cell located inside the frame, electrical battery terminals connected to the battery cells and extending to an exterior of the battery, and an identification section. The identification section comprises a machine readable identification. The electrical device is connected to the battery and has electrical contacts operably connected to the battery terminals. The electrical device comprises a battery identifier adapted to read the machine readable identification on the battery when the battery is connected to the electrical device.

In accordance with one method of the present invention a method of identifying a rechargeable battery device is provided comprising steps of connecting the rechargeable battery device to an electrical device, the rechargeable battery device having a machine readable identification on an exterior thereof and the electrical device having a battery identifier adapted to read the machine readable identification when the battery device is operably connected to the electrical device; and the battery identifier reads the machine readable identification and compares the machine readable identification to an acceptable battery identification for the electrical device.

In accordance with another method of the present invention a method of preventing improper use of a portable radio telephone rechargeable battery with an electrical device is provided comprising steps of providing the battery with an identification on an exterior thereof; providing the electrical device with means for sensing the identification; connecting the battery to the electrical device, the sensing means thereby sensing the identification; and the electrical device establishing an operable electrical connection with the battery only if the battery and electrical device are operationally configured and intended to be used with each other based upon the sensed identification and an acceptable identification recognizable by the electrical device.

In accordance with another method of the present invention a method of manufacturing portable radio telephones is provided comprising steps of providing at least two different types of radio telephone batteries, the two different types of batteries having different types of rechargeable battery cells, the two different types of batteries each having a housing with a connection section which have similar sizes and shapes; connecting two different machine readable identifiers to exteriors of the two different types of batteries, respectively, and connecting one of the batteries to a first portable radio telephone main unit and the other battery to a second portable radio telephone main unit.

The foregoing aspects and other features of the present invention are explained in the following description, taken in connection with the accompanying drawings, wherein:
Fig. 1 is a schematic view of a battery and battery charger incorporating features of the present invention;
Fig. 1A is a schematic view of the battery and a portion of the charger shown in Fig. 1;
Fig. 1B is a schematic view of an alternate embodiment of the present invention;
Fig. 1C is a schematic view of another alternate embodiment of the present invention;
Fig. 1 D is a schematic view of another alternate embodiment of the present invention.
Fig. 1 E is a schematic view of another alternate embodiment of the present invention.
Fig. 2A is a perspective view of an alternate type of battery with a machine readable identification of the present invention;
Fig. 2B is a perspective view of another alternate type of battery;
Fig. 2C is a perspective view of the battery shown in Fig. 2A with an alternate type of machine readable identification;
Fig. 2D is a perspective view of the battery shown in Fig. 2B with an alternate type of machine readable identification;
Fig. 2E is a perspective view of a column shaped battery with two types of machine readable identifications;
Fig. 3 is a schematic cross-sectional view of a combined battery charger and telephone holder showing a portable telephone and spare battery in exploded view; and
Fig. 4 is a partial exploded view of a portable telephone main unit and battery incorporating features of the present invention.

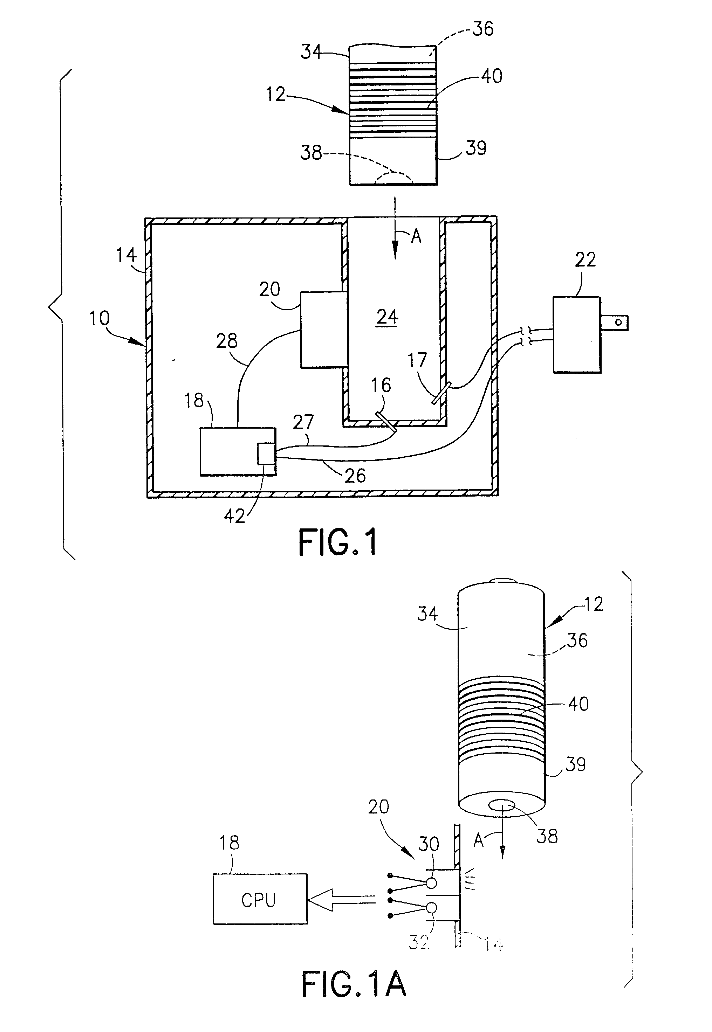

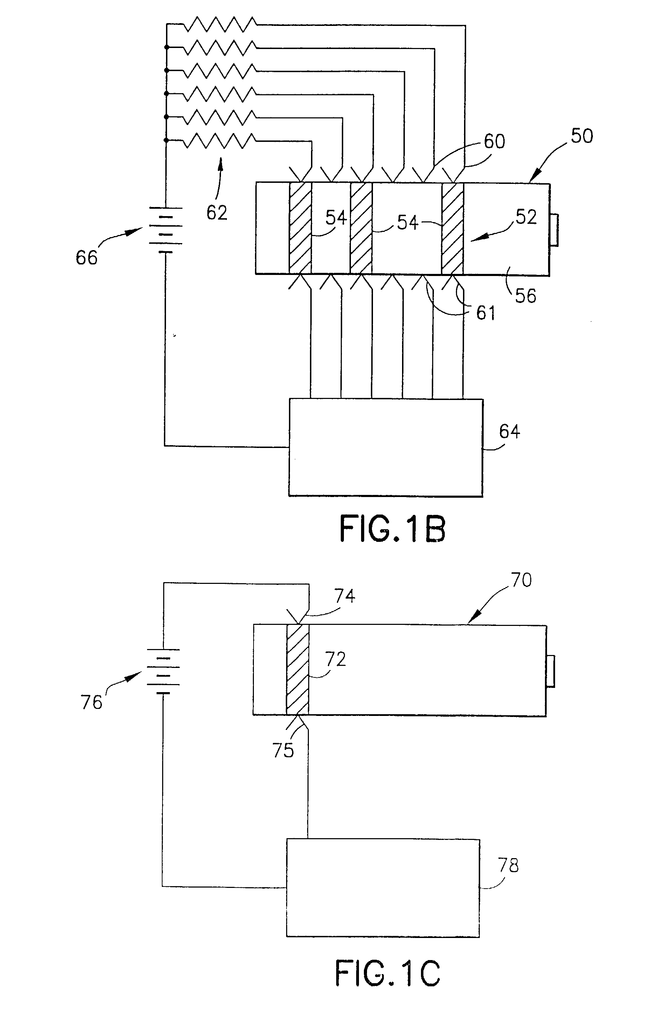

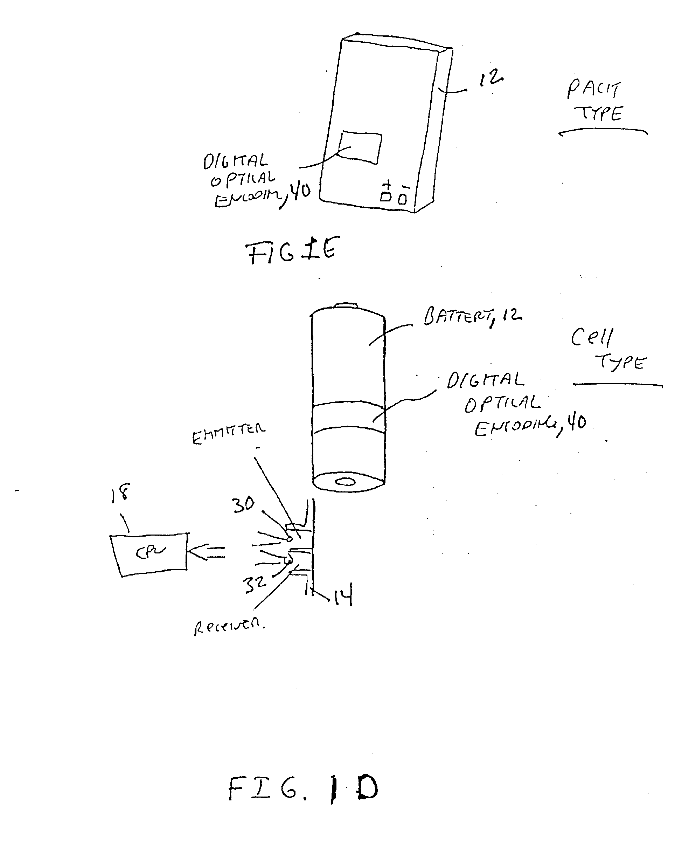

Referring to Fig. 1, there is shown a battery charger 10 and a battery 12 incorporating features of the present invention. Although the present invention will be described with reference to the embodiments shown in the drawings, it should be understood that the present invention can be embodied in many alternate forms of embodiments. In addition, any suitable size, shape or type of elements or materials could be used.

The battery charger 10 generally comprises a housing 14, battery terminal contacts 16, 17, a controller 18, a battery identifier 20, and a transformer 22. The housing 14 includes a receiving area 24. The receiving area 24 is sized and shaped to receive and hold at least a portion of the battery 12 therein. The battery terminal contacts 16, 17 are spring contacts which are connected to the housing 14 and project into the receiving area 24. One of the contacts 17 is connected directly to the transformer 22. The other contact 16 is connected to the controller 18. The controller 18 preferably comprises a computer or microprocessor. However, in an alternate embodiment the controller 18 could be a simple relay system, such as when the identifier 20 has its own recognition system as further understood below. The controller 18 is connected by power supply lines 26, 27 to the transformer 22 and one of the contacts 16. The controller 18 also has an input by line 28 from the identifier 20. The battery identifier 20 is stationarily connected to the housing 14 at a side of the receiving area 24. Referring also to Fig. 1A, in the embodiment shown the identifier 20 comprises an emitter 30, such as an LED emitter, and a detector 32. The emitter 30 could be powered directly from the transformer 22 or through the controller 18. A battery insertion switch could also trigger the emitter 30 when the battery 12 is inserted into the receiving area 24. In alternate embodiments other types of emitters, detectors or identifiers could be provided. The transformer 22 is a standard type of AC to DC transformer intended to be plugged into an electrical wall outlet.

The battery 12 is intended to be inserted into the receiving area 24 as indicated by arrow A. The battery 12 is a rechargeable battery. The battery 12 has a frame 34, at least one rechargeable battery cell 36 located inside the frame 34, battery terminals 38, 39, and an identifier section 40. The battery terminals 38, 39 and the contacts 16, 17 are sized, shaped and orientated to contact each other when the battery 12 is inserted into the receiving area 24. The identification section 40 comprises a machine readable identification and, in the embodiment shown, the identification is a bar code. The section 40 is attached to the exterior side of the frame 34. However, in an alternate embodiment the identification could be formed integral with the frame or be located at an internal area of the frame, such as if the frame has a window to view the identification. As noted above, the identification in this embodiment is a bar code. The code of the bar code is selected based upon the type of battery that it is attached to. More specifically, multiple batteries may have the general size and shape to be able to be inserted into the receiving area 24, however, they may be different types of batteries, such as having their battery cells made of different types of materials, such as nickel-cadmium, lead-acid, alkaline, lithium, etc. The code of the bar code is selected by the battery manufacturer or supplier to identify a predetermined characteristics of the battery which the code is attached to, such as the battery cell type. Thus, a first type of battery, such as having a lithium cell, will have a different code than a second type of battery, such as having a nickel-cadmium cell, even though the two batteries might have the same size and shape frame or the same power supply potential.

As the battery 12 is inserted into the receiving area 24, the identification section 40 passes by the identifier 20. As the identification section 40 passes by the identifier 20, light from the emitter 30 is projected at the section 40 and the bar code is detected or read by the detector 32. The detector 32 sends a signal to the controller 18 based upon its detection. The controller 18 preferably comprises a memory of acceptable bar codes of batteries which the charger 10 is intended to be used with. The controller 18 compares the signal received from the detector 32 with the stored acceptable identification(s) and, if they match or if there is a correspondence, the controller 18 then closes a switch 42 to close an otherwise open circuit from the transformer 22 to the terminal contact 16. If there is not a match between the signal received from the detector 32 and the stored acceptable identification(s), then the circuit to the terminal contact 16 remains open and no charging current is supplied to the battery 12. Thus, if a battery is inserted into the charger 10 which does not have a proper identification for use with that charger, the charger will not supply an electrical charging current to the improper battery. This prevents use of the charger with the wrong batteries.

With the present invention different types of batteries can be provided with the same size and shape frame, thereby reducing manufacturing costs, but without risk of using the wrong batteries with the wrong chargers. With the present invention the same components can be used for chargers intended to charge different type batteries with merely changing the acceptable identifications stored in the memory of the controller 18. Again, this can reduce manufacturing costs through a reduction in parts needed to supply a line of different chargers.

Referring also to Fig. 1B, an alternate embodiment of the identifier and identification is shown. In this embodiment the battery 50 has a machine readable identification section 52 which comprises a series of electrically conductive rings or strips 54 on an exterior dielectric surface 56 of the battery 50. In an alternate embodiment the exterior surface of the battery could be conductive and the identification section 52 could include dielectric rings or strips. The strips 54 are spaced or configured along the length of the battery in a predetermined pattern. The predetermined pattern is selected by the manufacturer or supplier based upon the battery type. The identifier 58 comprises a series of contacts 60, 61, resistors 62, sensor 64 and a voltage source 66. When the battery 50 is connected to the battery charger, the strips 54 align between some of the series of contacts 60, 61. Based upon which of the contacts 61 receive current from the strips 54, and which do not, the sensor 64 can determine the pattern of strips 54 on the battery 50. The sensor 64 can have a ROM memory of acceptable identification patterns and transmit a signal to the controller if the sensed identification pattern corresponds to a stored acceptable identification pattern. Alternatively, the sensor 64 could be hard wired to read an acceptable pattern and transmit or signal the controller and, the controller could compare sensed versus acceptable readings.

Referring also to Fig. 1C, another alternate embodiment is shown. In this embodiment the battery 70 has a single ring or strip identification 72. The identification 72 is comprised of a semi-conductive material, such as graphite. The identifier comprises two contacts 74, 75 connected to a voltage source 76 and a sensor 78. The sensor is adapted to read the current which is conducted through the semi-conductor strip 72. If the current matches a predetermined stored acceptable current reading, then the sensor 78 transmits a signal to the controller. Upon receiving the signal from the sensor 78, the controller allows battery recharging current to be supplied to the battery. If the signal is not sent by the sensor 78 to the controller, then the controller prevents a charging current from being supplied to a battery. The strip 72 can be provided with different resistances for different types of batteries.

Another alternative embodiment is shown in Fig. 1D. Here battery 12 has a digital optical encoding identifier section 40 having information stored therein (for instance, information stored in a manner similar to that of a compact disk). In this embodiment, battery identifier 20 and controller 18 would be adapted to process the information, in this case digital optical encoding, contained in identifier section 40.

Another alternative embodiment is shown in Fig. 1E. Here the battery is a pack-type battery in contrast to the cell-type battery shown in Fig. 1 D. The pack-type battery has on one side a digital optical encoding identifier section 40 which is read by the battery identifier. In this embodiment, receiving area 24 of housing 14 can be modified to accommodate the size and shape of the pack-type battery and the locations of the battery terminal contacts modified to accommodate the locations of the contacts on the pack-type battery.

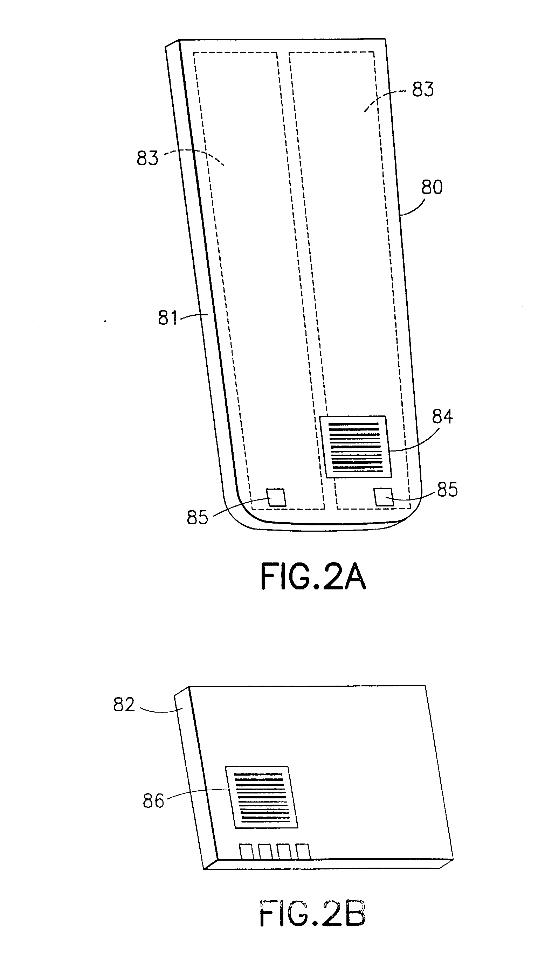

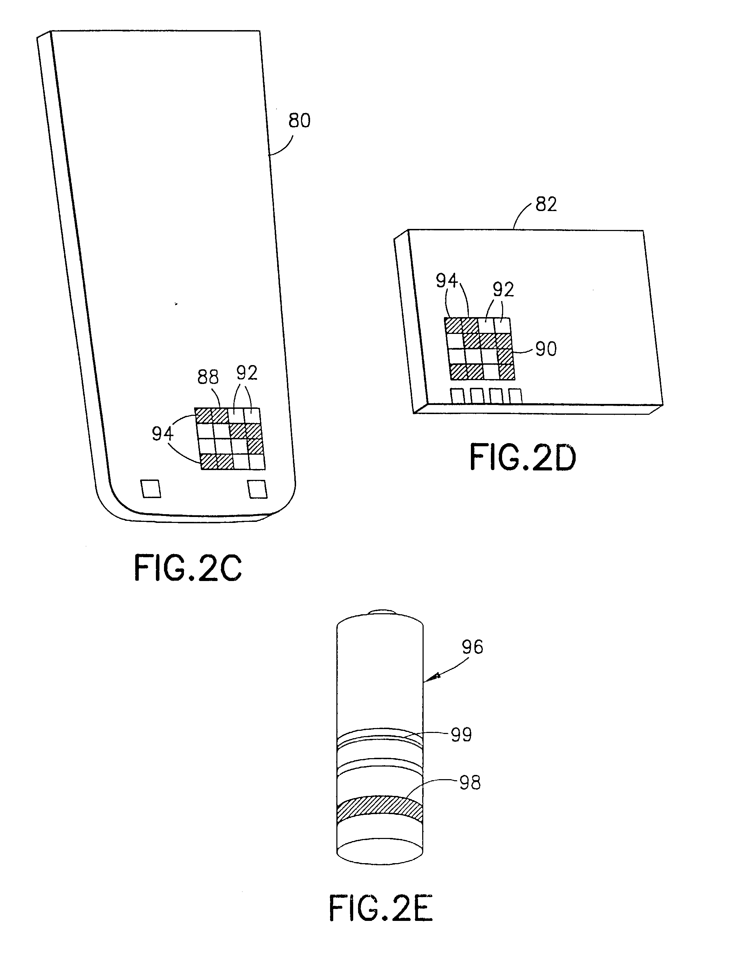

Referring now to Figs. 2A and 2B, two alternative types of batteries 80, 82 are shown with bar code identification sections 84, 86. These two figures are intended to illustrate that the present invention can be used with different size and shape batteries and that the identification sections need not wrap around the battery. The battery 80 includes a housing 81 and two battery cells 83 located inside the housing 81. The housing 81 has electrical contacts 85 thereon which are connected to the two cells 83. The battery 80 is thus a battery pack, such as used for a portable radio telephone. The housing 81 is preferably made of molded plastic and has integrally molded latch surfaces to snap-lock latch with a telephone main unit. Referring also to Figs. 2C and 2D, the two batteries 80, 82 of Figs. 2A and 2B are shown with different types of identification sections 88, 90 which have flat blocks or squares of electrically conductive 92 and non-conductive 94 material. The pattern or array of blocks is selected based upon the battery type. The reader would have suitable spring contacts to contact the sections 88, 90 and determine the pattern. Referring also to Fig. 2E, another alternate embodiment is shown. In this embodiment the battery 96 has two identification sections 98, 99. The first identification section 98 is a semi-conductive strip similar to that described in Fig. 1C. The second identification section 99 is a bar code similar to that described in Figs. 1 and 1A. Thus, the battery 96 can be used with two chargers having different types of battery identification readers or sensors.

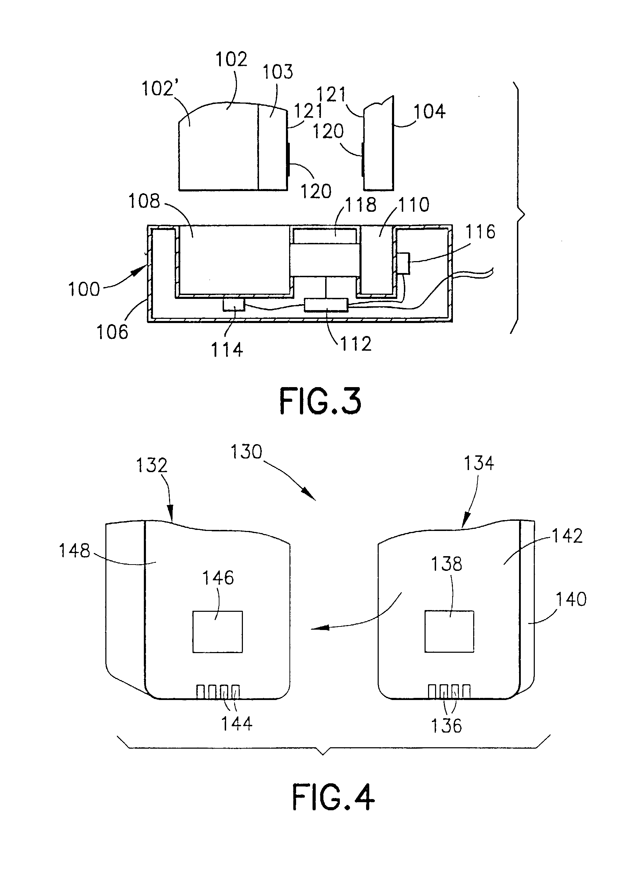

Referring now to Fig. 3, a combined portable telephone holder and battery charger 100 is shown schematically in cross-section with portions of a portable telephone 102 and a spare portable telephone battery 104 in an exploded view. The charger 100 has a frame 106 with two receiving areas 108, 110. The first receiving area 108 is sized and shaped to receive a bottom end of the telephone 102 and stabily support the telephone therein. The second receiving area 110 is sized and shaped to receive the bottom end of the spare battery 104 and stabily support the battery therein. The charger 100 has a controller 112, two charging terminals 114, 116 and a battery identifier 118. The identifier 118 has access to both receiving areas 108 and 110. The identifier 118 can send separate signals to the controller 112 based upon reading of the identification section 120 of the batteries 103, 104. The controller 112 can then control supply of battery recharging current to the two charging terminals 114, 116 based upon the signals received from the identifier 118. The telephone 102 comprises a main unit 102' with the battery 103 attached thereto. Battery charging current is supplied from the terminal 114, through the main unit 102', to the battery 103. The two batteries 103, 104 are interchangeable with the main unit 102'. In an alternate embodiment, based upon the identification signal sent by the identifier to the controller, the controller could select from at least two different charging modes for different types of batteries. For example, for a lithium battery the identifier would send a first signal to the controller and the controller would allow the charger to charge the lithium battery at a first charging rate or mode. However, for a nickel-cadmium battery, the identifier would send a second signal to the controller, different from the first signal, and the controller would allow the same charger to charge the nickel-cadmium at a second different charging rate or mode. Thus, a single charger, because of the machine readable identification on different types of batteries, can be used to automatically properly charge different types of batteries.

Referring now to Fig. 4, a partial exploded perspective view of a portable telephone 130 is shown. In this embodiment the telephone 130 has a main unit 132 and a removable rechargeable battery 134. The battery 134 has electrical contacts 136 and a machine readable identification section 138 on its housing 140. However, unlike the batteries shown in Fig. 3 which have their identification sections 120 on the rear side 121 of the batteries, the battery 134 has its identification section 138 on its front side 142; the side that faces the main unit 132 when the battery 134 is attached to the main unit 132. The main unit 132 has electrical contacts 144 for contacting the contacts 136 and a battery identifier 146. The battery identifier 146 is located on the rear side 148 of the main unit 132; the side against which the battery 134 is located. When the battery 134 is mounted to the main unit 132 the identification section 138 is positioned to be read by the battery identifier 146. The identifier 146 can send a signal to a controller inside the main unit 132 based upon that reading or sensing. The controller inside the main unit 132 can then compare the signal to stored signals of acceptable battery identifications. If there is a match or correspondence, the controller will allow the main unit 132 to use power from the battery 134. If there is not a match or correspondence, the controller will prevent the main unit 132 from using power from the battery 134. This can be done by enabling or disabling an electrical connection with the contacts 144. With this type of system having battery identification dependent power supply enablement, the system can prevent an improper battery type from being operably electrically connected with the main unit 132. The present invention could be used with other types of electrical devices other than portable telephones or portable telephone batteries.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during prosecution of this application or of any such further application derived therefrom.

## Claims

1. A portable electronic apparatus battery comprising:
a frame;
at least one rechargeable battery cell located inside the frame; and
means for identifying a predetermined characteristic of the battery by an apparatus which the battery is intended to be operably used with, the identifying means including a machine readable identification code.

2. A battery as in Claim 1 wherein the identifying means comprises an indicator of a battery cell type of the rechargeable battery cell and is located on an exterior of the frame.

3. A battery as in anyone of Claims 1, 2, 5, 6, 7 or 8, wherein the battery has a plurality of the battery cells, the frame is a portable radio telephone battery pack housing, and the machine readable identifier code is on an exterior surface of the battery pack housing.

4. A portable electronic apparatus battery pack comprising:
a housing;
at least two rechargeable battery cells located inside the housing; and
means for identifying the battery cells inside the housing by an electronic apparatus which the battery pack is intended to be operably used with, the identifying means including a machine readable identification code.

5. A battery as in Claim 2 or a battery pack as in Claim 4 wherein the machine readable identification code is located on an exterior of the housing and is coded to indicate the material which the battery cells are made of.

6. A battery as in anyone of Claims 1, 2, 5 or a battery pack as in Claim 4 or 5 wherein the machine readable identification code comprises a bar code.

7. A battery as in anyone of Claims 1, 2, 5 or a battery pack as in anyone of Claims 4 to 6 wherein the identifying means comprises a section of semi-conductive material on the exterior of the frame, the machine readable identification code comprising an electrical resistance value of the section of semi-conductive material.

8. A battery as in anyone of Claims 1, 2, 5 or a battery pack as in anyone of Claims 4 to 7 wherein the machine readable identification code comprises a digitally encoded series of conductive film segments.

9. A combined apparatus having a battery and an electrical device, the combined apparatus comprising:
the battery having a frame, at least one rechargeable battery cell located inside the frame, electrical battery terminals connected to the battery cell and extending to an exterior of the battery, and an identification section comprising a machine readable identification;
the electrical device being connected to the battery and having electrical contacts operably connected to the battery terminals, the electrical device comprising a battery identifier adapted to read the machine readable identification of the battery when the battery is connected to the electrical device.

10. A combined apparatus as in Claim 9 wherein the electrical device comprises a portable radio telephone main unit.

11. A combined apparatus as in Claim 9 or 10 wherein the electrical device comprises a battery charger with a pocket for receiving a portion of the battery frame.

12. A combined apparatus as in anyone of Claims 9 to 11 wherein the machine readable identification is located at the exterior of the battery and comprises a bar code and the battery identifier comprises a bar code reader.

13. A combined apparatus as in anyone of Claims 9 to 12 wherein the identification section at the exterior of the battery comprises a section of semi-conductive material and the battery identifier of the electrical device measures resistance across the section of semi-conductive material.

14. A combined apparatus as in anyone of Claims 9 to 13 wherein the identification section at the exterior of the battery comprises a series of conductive and non-conductive strip areas.

15. A method of identifying a rechargeable battery device, the method comprising steps of:
connecting the rechargeable battery device to an electrical device, the rechargeable battery device having a machine readable identification and the electrical device having a battery identifier adapted to read the machine readable identification; and
the battery identifier reading the machine readable identification and comparing the machine readable identification to an acceptable battery identification for the electrical device.

16. A method as in Claim 15 wherein the electrical device is a portable radio telephone main unit and the step of connecting connects the battery device to the portable radio telephone main unit to form a complete portable radio telephone.

17. A method as in Claim 16 further comprising connecting the complete portable radio telephone to a combined telephone holder and battery recharger, wherein the combined telephone holder and battery recharger has a second battery identifier.

18. A method as in Claim 17 wherein the second battery identifier reads the machine readable identification which is located on the exterior of the battery device when the complete telephone is connected to the combined telephone holder and battery recharger.

19. A method as in Claim 17 or 18 wherein circuitry in the complete telephone transmits a signal to the combined telephone holder and battery recharger corresponding to the battery device machine readable identifier.

20. A method as in anyone of Claims 15 to 19 wherein the electrical device is a battery recharger and the step of connecting connects the battery terminals of the battery device to electrical contacts of the battery recharger.

21. A method as in anyone of Claims 15 to 20 further comprising preventing operable electrical connection of the electrical device to battery cells in the battery device unless the machine readable identification corresponds to the acceptable battery identification.

22. A method as in anyone of Claims 15 to 21 wherein the electrical device has at least two acceptable battery identifications.

23. A method as in Claim 22 wherein the electrical device is adapted to switch between at least two different active modes of operation based upon which of the acceptable battery identifications are read by the battery identifier.

24. A method of preventing improper use of a portable radio telephone rechargeable battery with an electrical device, the method comprising steps of:
providing the battery with an identification;
providing the electrical device with means for sensing the identification;
connecting the battery to the electrical device, the sensing means thereby sensing the identification; and
the electrical device establishing an operable electrical connection with the battery only if the battery and electrical device are operationally configured and intended to be used with each other based upon the sensed identification and an acceptable identification recognizable by the electrical device.

25. A method of manufacturing portable radio telephones comprising:
providing at least two different types of radio telephone batteries, the two different types of batteries having different types of rechargeable battery cells, the two different types of batteries each having a housing with a connection section which have similar sizes and shapes;
connecting two different machine readable identifiers to exteriors of the two different types of batteries, respectively; and
connecting one of the batteries to a first portable radio telephone main unit and the other battery to a second portable radio telephone main unit.
